# EUROPEAN PATENT APPLICATION

(11) **EP 2 866 189 A1**
(43) Date of publication of application: **29.04.2015**
(21) Application number: 13808872.9
(22) Date of filing: 26.06.2013
(51) Int. Cl.: G06Q 50/06

(54) **DEMAND-RESPONSE SYSTEM, TERMINAL DEVICE, SERVER, CONTROL METHOD, AND RECORDING MEDIUM**

(30) Priority: 26.06.2012 JP 2012143525
(71) Applicant: Panasonic Intellectual Property Management Co., Ltd., Osaka-shi, Osaka 540-6207 (JP)
(72) Inventor: BEHRANGRAD, Mahdi, 2-1-61 Shiromi Chuo-ku Osaka 540-6207 (JP)
(74) Representative: Vigand, Philippe
(86) International application number: PCT/JP2013/003998
(87) International publication number: WO 2014/002494

(57) **Abstract**

A DR controller (200) includes: an activation and verification unit (202) which accepts a first identifier identifying a server (100) and a second identifier identifying a contract unique to each user; a communication unit (203) which transmits the second identifier to the server (100) identified by the first identifier; a communication unit (203) which receives a control schedule for an energy consumption device generated based the contract by the server (100) as a response to the transmitted second identifier; and an interface unit (201) which controls the energy consumption device to reduce energy consumption by the energy consumption device based on the control schedule, wherein the server (100) includes: a communication unit (101) which receives the second identifier from a terminal apparatus; a pairing management unit (103) which generates a control schedule unique to each user, for the energy consumption device based on a contract identified by the second identifier; and a communication unit (101) which transmits the generated control schedule to the terminal apparatus.

## Description

### [Technical Field]

The present invention relates to a demand response system which includes a terminal apparatus capable of controlling energy consumption devices and a server which can communicate with the terminal apparatus via a network, and relates to a terminal apparatus, a server, a controlling method, and a recoding medium in the demand response system.

### [Background Art]

In some countries such as the United States, there are service aggregators which provide a demand response (DR) (hereinafter described as DR) service. A user who has signed a DR service contract (hereinafter described as DR contract) with the service aggregator reduces energy consumption of load devices (energy consumption devices) in a premise for which the user has the DR contract during a time duration in which the electric bill is high or a time duration in which power demand is tight. For example, when an individual user signs a DR service contract, the user reduces energy consumption at home. As a result, according to an energy consumption reduction, the user obtains an incentive from the service aggregator.

### [Citation List]

### [Patent Literature]

### [PTL 1]

Patent Literature 1: U.S. Unexamined Patent Application Publication No. 2008/0238710

### [Summary of Invention]

### [Technical Problem]

However, the above described technique allows a DR provider (DR supplier, that is, the user) to perform DR only in the designated premise. For example, consider that the user signs a DR contract for a specific premise (for example, home). Even if the user has the right to perform DR, the desired DR contract and pattern cannot be applied to other premises in which the user can perform DR.

Moreover, the aggregator cannot know the DR activity when the user is outside the designated premise. This will reduce the DR extent that can be aggregated from an aggregator point of view.

Therefore, the present invention provides a demand response system which allows the user to perform DR even when the user is outside the designated premise.

### [Solution to Problem]

A demand response system according to an aspect of the present invention is a demand response system comprising: a terminal apparatus capable of controlling an energy consumption device; and a server capable of communicating with the terminal apparatus via a network, wherein the terminal apparatus includes: an input unit configured to accept a first identifier and a second identifier, the first identifier identifying the server, the second identifier identifying a contract unique to each user, for controlling the energy consumption device; a first transmission unit configured to transmit the second identifier to the server identified by the first identifier; a first receiving unit configured to receive a control schedule, from the server, as a response to the transmitted second identifier, the control schedule being generated based on the contract by the server and being for the energy consumption device; and a first control unit configured to control the energy consumption device to reduce energy consumption by the energy consumption device, based on the control schedule received by the first receiving unit, wherein the server includes: a second receiving unit configured to receive the second identifier from the terminal apparatus; a second control unit configured to generate a control schedule, based on the contract identified by the second identifier, the control schedule being for the energy consumption device and being unique the user; and a second transmission unit configured to transmit the control schedule generated by the second control unit to the terminal apparatus as a response to the received second identifier.

It should be noted that these general and specific aspects may be implemented using a system, a method, an integrated circuit, a computer program, or a computer-readable recording medium such as a CD-ROM, or any combination of systems, methods, integrated circuits, computer programs, or recording media.

### [Advantageous Effects of Invention]

Therefore, the present invention can provide a demand response system which allows the user to perform DR even when the user is outside the designated premise.

### [Brief Description of Drawings]

[FIG. 1]

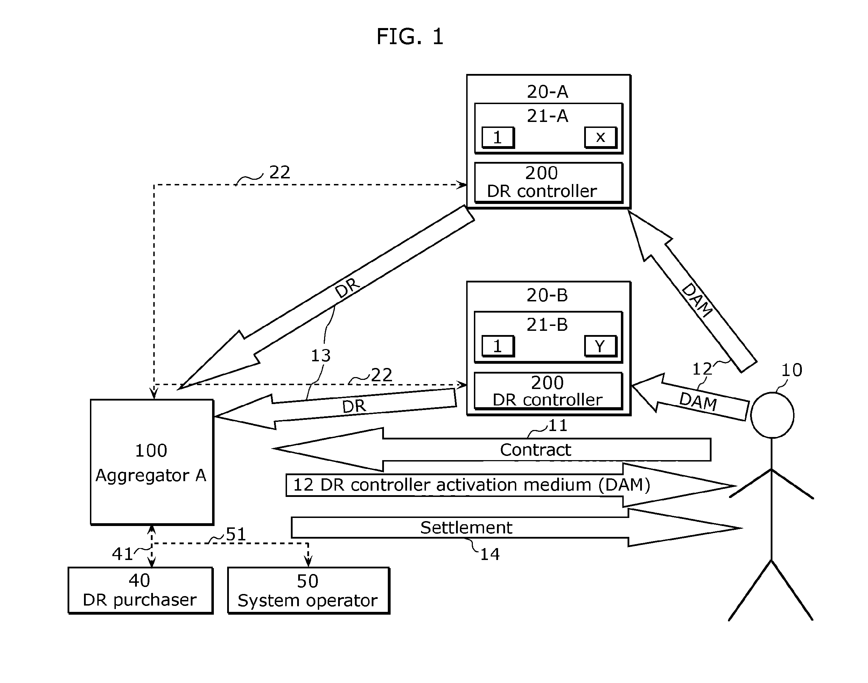

   FIG. 1 is a diagram showing a concept of a contract and DRC activation in one embodiment of the present invention.
[FIG. 2]

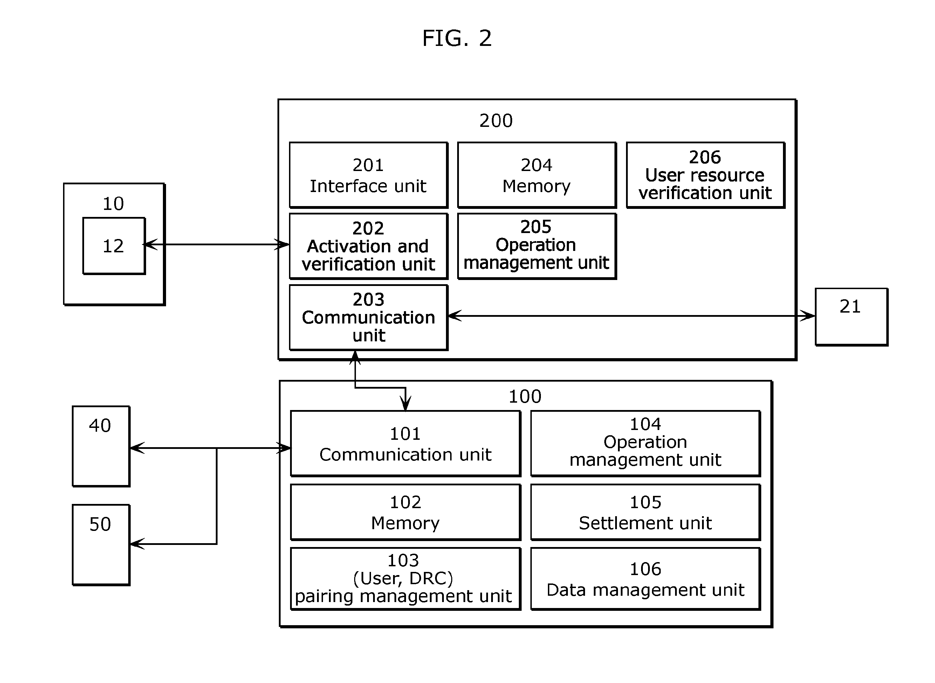

   FIG. 2 is a diagram showing internal process blocks of the aggregator and DRC in one embodiment.
[FIG. 3]

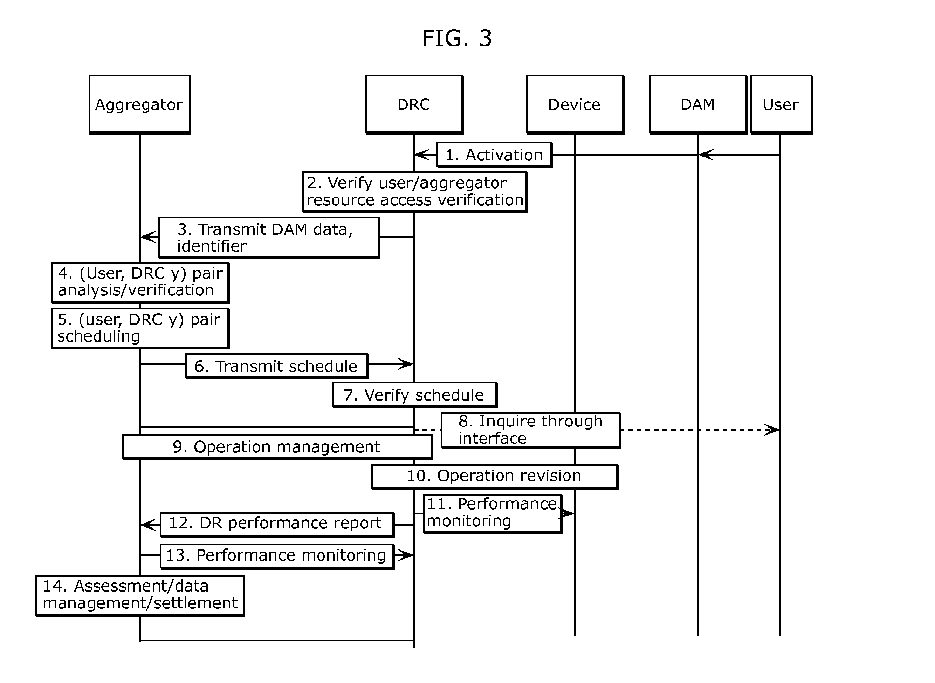

   FIG. 3 is a diagram showing the DR scheduling and implementation sequence in one embodiment.
[FIG. 4]

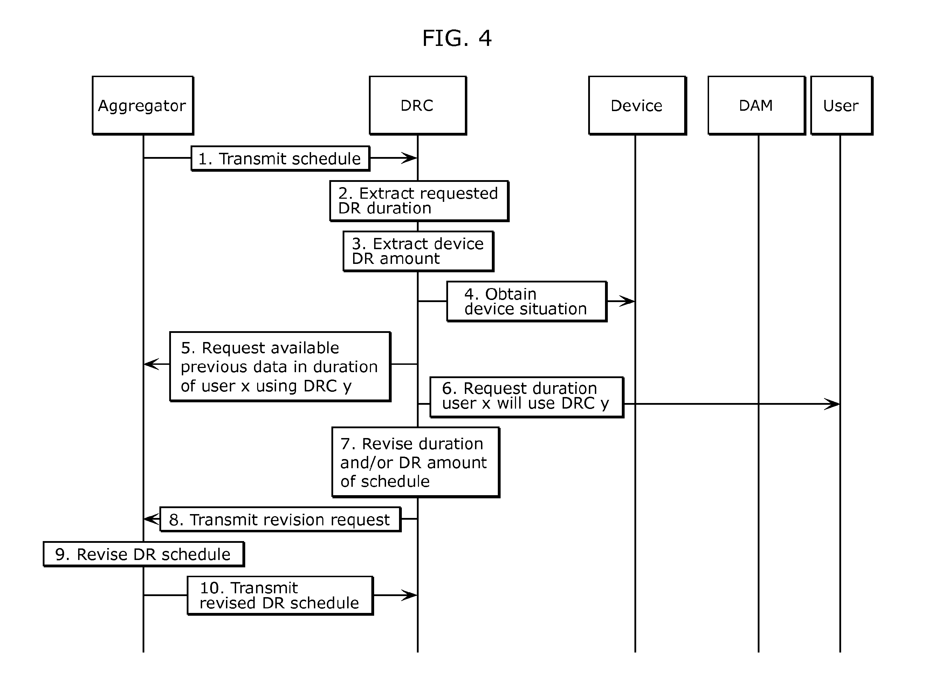

   FIG. 4 is a diagram showing the sequence of revising the DR schedule in one embodiment.
[FIG. 5A]

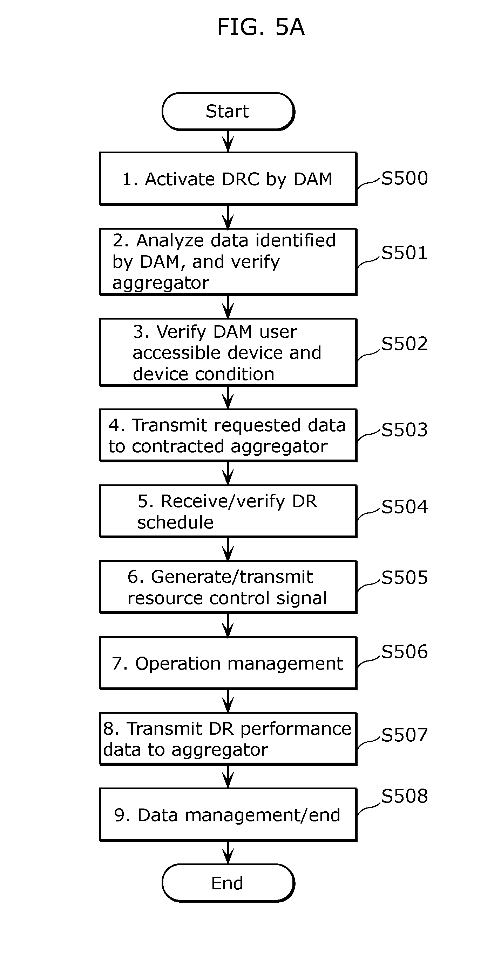

   FIG. 5A is a flowchart of DRC in one embodiment.
[FIG. 5B]

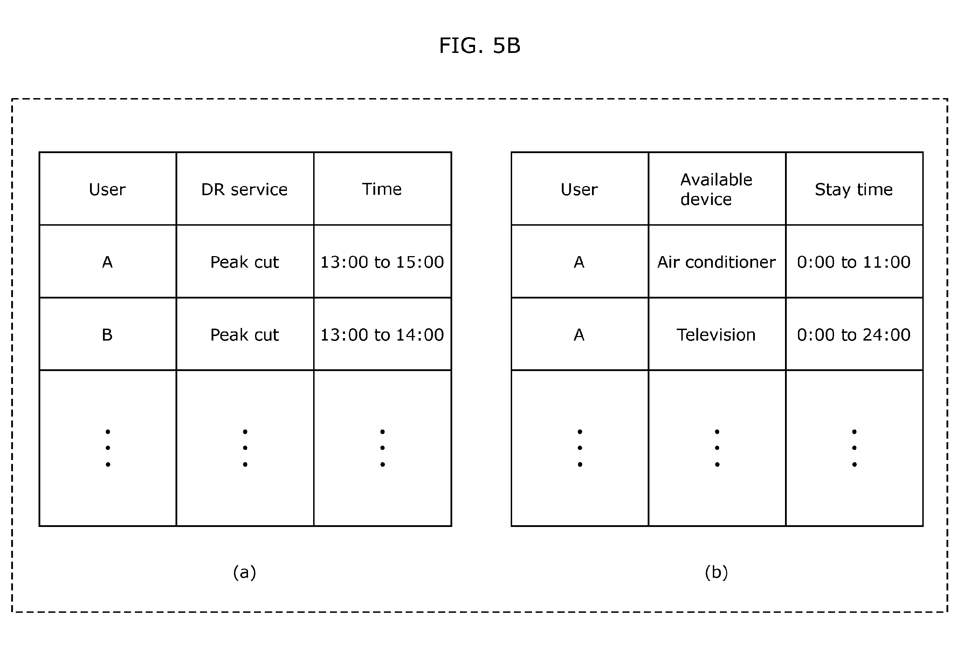

   FIG. 5B is a diagram for explaining data used by DRC in one embodiment.
[FIG. 6]

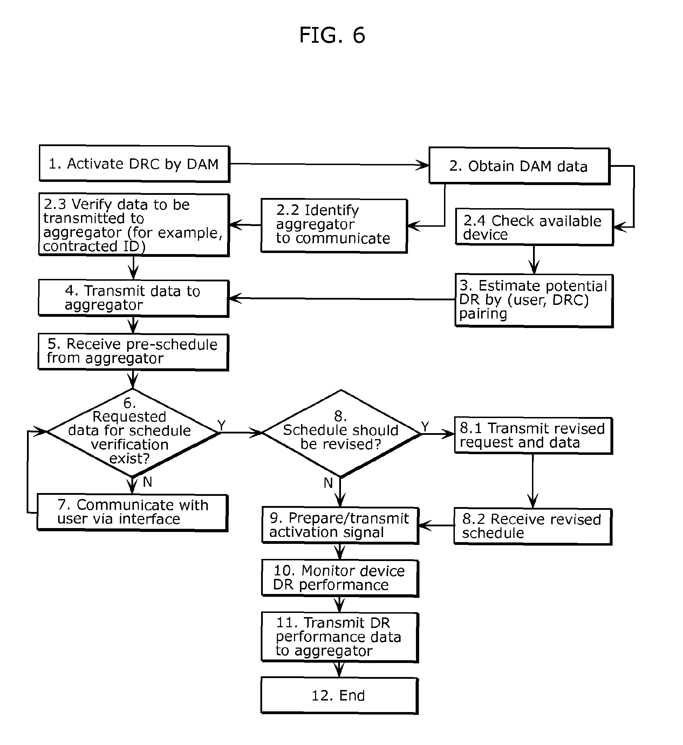

   FIG. 6 is a flowchart of DRC in one of the other embodiments.
[FIG. 7]

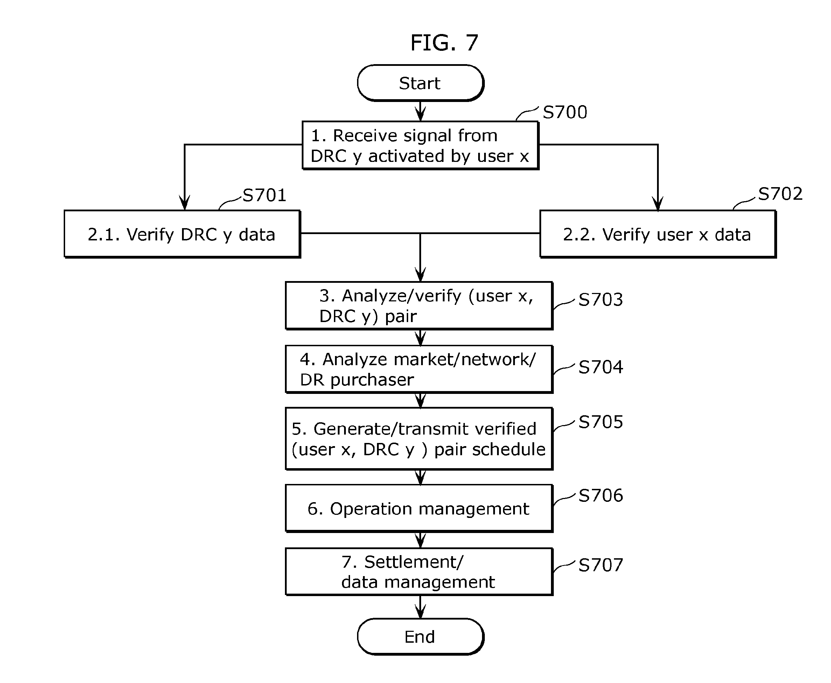

   FIG. 7 is a flowchart of an aggregator according to one embodiment.
[FIG. 8]

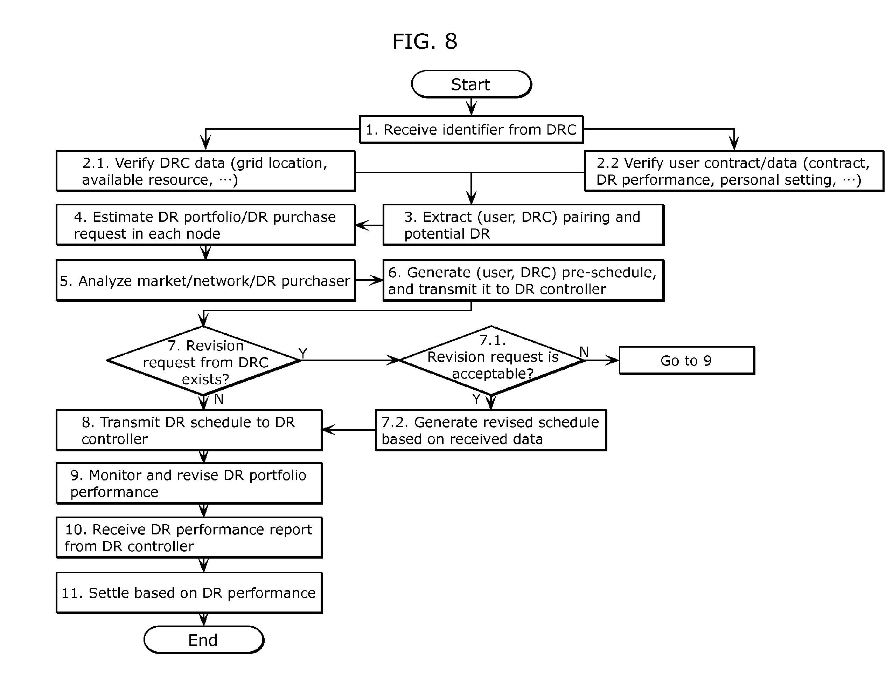

   FIG. 8 is a flowchart of an aggregator in one of the other embodiments.
[FIG. 9]

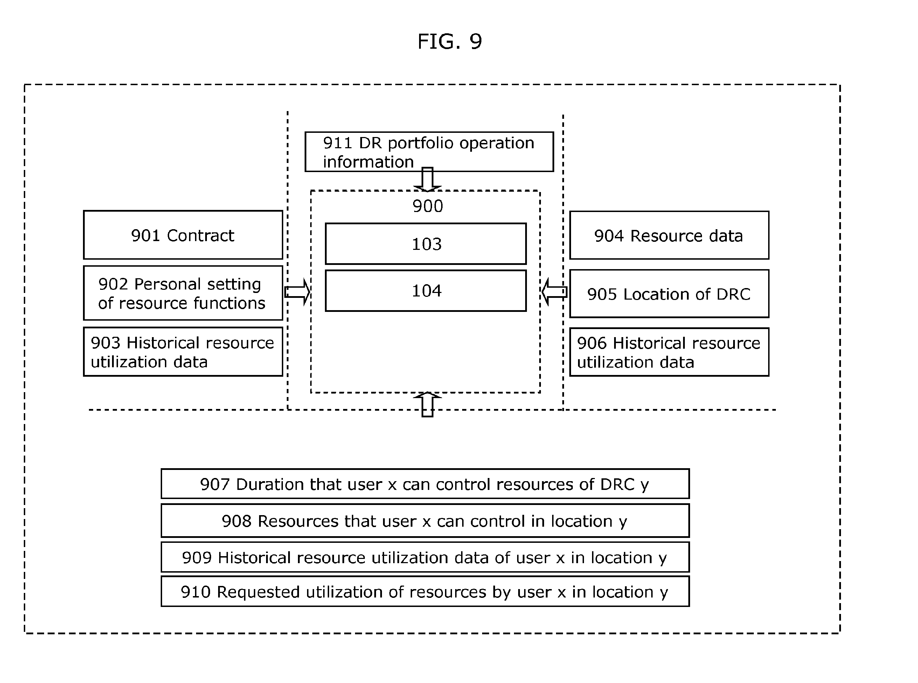

   FIG. 9 is a diagram showing pair DR (user and DRC) analysis requirements in one embodiment.

### [Description of Embodiments]

A demand response system according to an aspect of the present invention is a demand response system comprising: a terminal apparatus capable of controlling an energy consumption device; and a server capable of communicating with the terminal apparatus via a network, wherein the terminal apparatus includes: an input unit configured to accept a first identifier and a second identifier, the first identifier identifying the server, the second identifier identifying a contract unique to each user, for controlling the energy consumption device; a first transmission unit configured to transmit the second identifier to the server identified by the first identifier; a first receiving unit configured to receive a control schedule, from the server, as a response to the transmitted second identifier, the control schedule being generated based on the contract by the server and being for the energy consumption device; and a first control unit configured to control the energy consumption device to reduce energy consumption by the energy consumption device, based on the control schedule received by the first receiving unit, wherein the server includes: a second receiving unit configured to receive the second identifier from the terminal apparatus; a second control unit configured to generate a control schedule, based on the contract identified by the second identifier, the control schedule being for the energy consumption device and being unique the user; and a second transmission unit configured to transmit the control schedule generated by the second control unit to the terminal apparatus as a response to the received second identifier.

With this, the demand response system can generate a control schedule for energy consumption devices based on the contract unique to each user, and can control the energy consumption devices according to the generated control schedule. In other words, it is possible to control the energy consumption devices based on the user contract without limiting to the premise equipped with the energy consumption devices. Therefore, the demand response system makes it possible for the user to perform DR even outside the designated premise.

Here, the user-specific contract will be described in a complementary manner. The conventional contract is a contract tied to the place (premise) in which an energy consumption devices is installed. Therefore, since the contract can be identified from the place where the energy consumption device is installed, an identifier identifying the contract is not necessarily needed. Conversely, a contract in the demand response system according to an aspect of the present invention is a contract tied to the user instead of the place (premise) where the energy consumption device is installed. In other words, when the user moves from Place A to Place B, the demand response system can, based on the user contract, control the energy consumption device installed in Place A when the user is in Place A, and can control the energy consumption device installed in Place B when the user is in Place B. Moreover, as another example, when a user C stays in Place P in time duration T and another user D stays in Place P in another time duration S, the demand response system can, based on the user C contract, control the energy consumption device installed in Place P when the user C stays in Place P, and can control, based on the user D contract, the energy consumption device installed in Place P when the user D stays in Place P.

For example, the terminal apparatus may further include a first memory which stores a third identifier identifying the energy consumption device, the first transmission unit may be further configured to transmit the third identifier to the server, the second receiving unit may be further configured to receive the third identifier from the terminal apparatus, and the second control unit may be configured to generate a control schedule as the control schedule based on a contract identified by the second identifier, the control schedule being for the energy consumption device identified by the third identifier, and being unique to each user.

With this, the demand response system can receive an identifier (third identifier) identifying the energy consumption device from the terminal apparatus, and generate a control schedule for the energy consumption device. Therefore, the demand response system can, on receipt of the user explicit instruction to the energy consumption device, generate a control schedule for the energy consumption device.

For example, the energy consumption device may be an energy consumption device which is installed at a location where the user is allowed to control energy consumption, the first memory holds location information indicating the location, the first transmission unit may be configured to transmit the location information to the server, the second receiving unit may be configured to receive the location information from the terminal apparatus, and the second control unit may be configured to generate a control schedule as the control schedule based on the contract identified by the second identifier, the control schedule being for the energy consumption device, being unique to each user, being for the energy consumption device identified by the third identifier, and being determined based on the location information.

With this, the demand response system can generate a control schedule according to the place where an energy consumption device to be controlled is installed. With this, the demand response system can appropriately control the energy consumption device according to the place where the energy consumption device is installed and a power supply-demand balance in a power grid which covers the place.

For example, the first memory may hold DR information which is information about an operation situation of the energy consumption device or about a duration that the user is allowed to use the energy consumption device, the first control unit may be configured to determine whether or not control of the energy consumption device is allowed to be performed according to the control schedule by comparing the control schedule with the DR information, when the first transmission unit determines that the control is not allowed to be performed, the first transmission unit may be configured to transmit, to the server, (i) a revision request for revising the control schedule and (ii) revision information about an operation situation of the energy consumption device or about a duration that the user is allowed to use the energy consumption device, the second receiving unit may be configured to receive the revision information from the terminal apparatus, the second control unit may be configured to generate the control schedule by revising the control schedule based on the revision information, and the first control unit may be configured to control the energy consumption device based on the control schedule revised by the second control unit.

With this, the demand response system can generate a control schedule for an energy consumption device considering a duration that the user can use the energy consumption device. As described above, when the user moves from one place to another, a duration that the user can user the energy consumption device is limited. In that case, the demand response system can generate a control schedule considering the duration, by revising the generated control schedule.

For example, the terminal apparatus may transmit the control schedule to a notification device which notifies a user of the control schedule, and the first control unit may be configured to determine whether or not the control is allowed to be performed based on (i) an instruction inputted via the notification device by the user and (ii) the control schedule. For example, the terminal apparatus may include an interface which shows the control schedule to the user by an image, a text message, or voice, and the first control unit may be configured to, after showing the control schedule to the user, determine whether or not the control is allowed to be performed according to the control schedule, based on an instruction inputted via the interface by the user. For example, the first control unit may be configured to control the energy consumption device based on the control schedule when the control is allowed to be performed, and to revise the control schedule based on content of the instruction by the user when the control is not allowed to be performed.

With this, the demand response system can revise the control schedule based on the explicit instruction from the user.

For example, the first transmission unit may be configured to transmit result information indicating a result of the control, the second receiving unit may be configured to receive the result information from the terminal apparatus, and the server further may include a second memory which stores the result information received by the second receiving unit.

With this, the demand response system can receive a result of controlling the energy consumption device according to the generated control schedule. Using the result, the demand response system can give incentive to the user or impose a penalty on the user.

For example, the input unit may be configured to accept the first identifier and the second identifier by reading the first identifier and the second identifier from a recording medium having the first identifier and the second identifier recorded thereon.

With this, the first identifier and the second identifier are inputted to the demand response system via a recording medium.

For example, the energy consumption device may be at least one of a home electric appliance, an energy storage device, and an energy generation device.

With this, the demand response system can generate a control schedule for at least one of the household electric appliance, the energy storage device, and the energy generation device, and can thus control energy consumption.

For example, the control may be a response of a user to a request from an aggregator or a service provider which is capable of responding to at least one of a change in user profile, a change in user energy profile, and a request to be used as a source of an ancillary service related to DR such as a reserve emergency backup, a frequency regulation, or a price regulation.

With this, the demand response system can control the energy consumption device based on a user response to the request of an aggregator or a service provider.

Moreover, a server according to an aspect of the present invention is a server which is capable of communicating via a network with a terminal apparatus capable of controlling an energy consumption device, the server comprising: a receiving unit configured to receive a second identifier from the terminal apparatus connected to the energy consumption device, the second identifier identifying a contract unique to each user, for controlling the energy consumption device; a control unit configured to generate a control schedule based on the contract identified by the second identifier, the control schedule being for the energy consumption device; and a transmission unit configured to transmit, to the terminal apparatus, the control schedule generated by the control unit.

With this, the same advantageous effect as that of the above described configuration is obtained.

Moreover, a terminal apparatus according to an aspect of the present invention is a terminal apparatus which is capable of controlling an energy consumption device, the terminal apparatus comprising: an input unit configured to accept a first identifier and a second identifier, the first identifier identifying a server which generates information for performing control on the energy consumption device, the second identifier identifying a contract unique to user, for the control; a transmission unit configured to transmit the second identifier to the server identified by the first identifier; a receiving unit configured to receive, from the server, a control schedule as a response to the transmitted second identifier, the control schedule being generated based on the contract by the server and being for the energy consumption device; and a control unit configured to control the energy consumption device to reduce energy consumption by the energy consumption device, based on the control schedule received by the receiving unit.

With this, the same advantageous effect as that of the above described configuration is obtained.

Moreover, a control method according to an aspect of the present invention is a controlling method in a terminal apparatus which is capable of controlling an energy consumption device, the controlling method comprising: accepting a first identifier and a second identifier, the first identifier identifying a server which generates information for performing control of the energy consumption device, the second identifier identifying a contract unique to each user, for the control; transmitting the second identifier to the server identified by the first identifier; receiving, from the server, a control schedule as a response to the transmitted second identifier, the control schedule being generated based on the contract by the server and being for the energy consumption device; and controlling the energy consumption device to reduce energy consumption by the energy consumption device, based on the control schedule received in the receiving.

With this, the same advantageous effect as that of the above described configuration is obtained.

Moreover, a recording medium according to an aspect of the present invention is a recording medium which is accepted in the input unit of the terminal apparatus in the demand response system, the recording medium having the first identifier and the second identifier recorded thereon.

With this, the same advantageous effect as that of the above described configuration is obtained.

It should be noted that these general and specific aspects may be implemented using a system, a method, an integrated circuit, a computer program, or a computer-readable recording medium such as a CD-ROM, or any combination of systems, methods, integrated circuits, computer programs, or recording media.

The following will describe embodiments with reference to the drawings.

Each of the embodiments described below shows a general or specific example. The numerical values, shapes, materials, structural elements, the arrangement and connection of the structural elements, steps, the processing order of the steps etc. shown in the following embodiments are mere examples, and therefore do not limit the scope of the present invention. Therefore, among the structural elements in the following embodiments, structural elements not recited in any one of the independent claims are described as arbitrary structural elements.

In a power transmission and distribution network according to the embodiment, there are a power producer, a power transmission and distribution company, and an aggregator (DR provider). The power producer generates power and supplies the power to the power transmission and distribution company. The power transmission and distribution company supplies the power supplied from the power producer to a power consumer via an electrical grid. The aggregator concludes a contract about DR (DR contract) with the power consumer, and pays an incentive to the power consumer according to the contract. The contract includes a contract regarding adjustment of power consumption by the power consumer in order to strike a power supply-demand balance between the power producer, the power transmission and distribution company, and the power consumer.

In the DR service, an incentive introduced by a system operator or a service aggregator makes it possible to change the energy consumption characteristics such as a pattern, a form, or a timing of energy consumption.

DR services reduce system operation cost for a system operator, greenhouse gas (GHG) emission, required capital investment for network expansion, blackouts, and increase system reliability, security and market efficiency. Use of more DR resources increases the benefits of DR resources from a system operator point of view, and also brings more benefits to both the system aggregator and the DR provider.

The conventional DR aggregation method regards DR resources as resources that are available just in specific premises. Therefore, there is no method for associating DR action against the DR resources with a DR provider outside the designated premises. Therefore, when the DR provider (the customer allowing his/her own resource to be changed as DR service) moves out of the designated premise and even if the DR provider has the intention to perform DR service and has the right to perform DR in a new premise, the DR service cannot be harvested by an aggregator in the premise. In addition, it is not possible to consider the designated DR service pattern and contracts of DR provider in other premises the DR provider intends to perform DR.

As an example of the case where a person has signed DR contract for home, even when the person wants to sell DR service during a stay in the hotel for few days and even when the person has the right to control the room electrical appliances, the person cannot sell the DR action and DR activity to the contracted aggregator and the reward in the user home DR contracts cannot be regarded as the reward in the DR activity in the hotel room.

An aspect of the present invention makes it possible for the aggregator to increase the DR harvesting amount and for the DR provider (user) to perform DR even when the DR provider (user) moves out of the home.

An aspect of the present invention includes a DR aggregating method, a structure, and a device for enabling to aggregate DR actions when the DR provider is moving. According to the present invention, the DR activity of the DR provider can be aggregated based on (i) the contract of the DR provider and (ii) desired settings in any premise that the DR provider intends to sell DR service and has the right to control the resources. It is necessary to control a duration that the provider uses the resources in each of the premises and to control the resources to be controlled in each of the premises.

In one embodiment of the present invention, after the DR provider signs a DR contract, the DR provider receives a personal demand response activation medium (DAM). The DAM is used for allowing the DR provider to control energy consumption devices and activate a demand response controller (DRC) in a premise to be controlled.

According to one embodiment of the present invention, DAM includes an identifier identifying an aggregator having the DR service contract (identifier 1), and an identifier identifying the information of the contract between the DR provider and the DR aggregator (identifier 2). The identifier 1 of DAM activates DRC, and obtains a communication address of the aggregator having the DR service contract with DAM having the DR provider. The identifier 2 of DAM, after receiving ID, causes the aggregator having the DR service contract with the DAM holder to obtain the user related data (contract content, DR action form, desired resource utilization setting, and historical resource utilization).

In one embodiment of the present invention, the data forms of the identifier 1 and the identifier 2 are not limited. In other words, the identifier 1 and the identifier 2 may be data stored in a memory card, a symbol string, and other forms.

After the DRC is activated, the DRC (for example, DRC y) contacts an appropriate aggregator activated by the user (for example user x). The DRC transmits the context data (that is, available energy, working set point wattage, and control level of user x on each resource) of its available resources of the DRC that user x is allowed to control (identifier 3). For example, DRC y is in an office room of user x. In the user x office room, there are a television, a personal computer, air conditioner, and a monitoring camera. Based on a company determination, user x has no right to switch ON or OFF the monitoring camera and the PC. Therefore, DRC y can control other things than the monitoring camera and the PC. Such control level information is transmitted to the aggregator via DRC y.

Based on the embodiment of the present invention, upon receiving the data on (DRC y, user x) pair (means user x which activated DRC in location y), the aggregator analyzes the DR possibilities when user x uses DRC y and determines a time schedule when the DR of user x is allowed in the location of DRC y.

The aggregator will take into account its operation results (for example, market data, market price, DR price, DR purchaser requests, grid location of each DRC y, the available portfolio in the operation situation).

Based on one embodiment of the present invention, DRC y verifies whether or not the schedule is feasible by updating the resource situation and the duration that user x can control DRC y. For example, when user x is in a hotel room and should check out at 11:00 a.m., the resources of the room are allowed to be controlled by DR until 12:00. However, user x has no right to control the room resources since user x has to check out at 11:00. Therefore, a DR plan for 12:00 is not feasible.

In one of the other embodiments of the present invention, the aggregator is responsible for verifying feasibility.

Furthermore, in one of the other embodiments, DRC and the aggregator both are responsible for verifying feasibility. In these embodiments, when there is not enough data to verify the DR plan, the responsible party asks DRC to communicate with the user, and obtains data on a duration that user x is allowed to control DRC y, for example.

This communication may be any communication medium such as DRC interface, email, pager, and telephone that can be registered as a customer contract.

After feasibility verification, when there is any contradiction, the responsible party transmits a revision request to the aggregator. The aggregator revises the schedule and transmits the revised schedule to DRC for implementation.

Based on the final schedule, DRC monitors the resource utilization situation and report it to the aggregator.

The aggregator monitors the DRC performance based on the (DRC y, user x) schedule. The determination is performed by user x based on the DR performance, contract, and the revised schedule. The performance data are stored in the designated location (DAM memory, DRC memory, or aggregator memory) for data management and utilization.

Based on the presented invented aggregation structure, method and device, DR activities of the moving DR resource can be incorporated. In addition, it is possible to consider (i) the personal contract content and (ii) desired resource utilization pattern of a DR provider in any premise having energy flow of any resource that the person wants to and is permitted to control.

From a DR aggregator point of view, the embodiment makes it possible to increase utilization efficiency of DR in more locations. It is possible to reduce the conventional limitations on DR contract and to increase a DR program participation rate.

The embodiment makes it possible for a DR provider to provide more frequently and more flexibly energy consumption in more locations in which DRCs are installed.

In other words, one aspect of the present invention is a DR aggregation method and a DR aggregation device which allow the moving user to sell DR service to a DR aggregator in a location having the right to control at least one of the energy consumption device, the energy storage device, and the energy generation device.

With such an embodiment in the present invention, it is possible for a DR provider to obtain more incentives, and for the aggregator to harvest more DR services, and for the system operator to hold more available DR services for optimizing the system operation.

It should be noted that the examples and the drawings in this section are not the only embodiment of the present invention. The examples and the drawings in this section are presented for clarifying the description of the present invention. The main scope of the present invention is described by Claims.

### [Embodiment]

FIG. 1 is a diagram showing the concept of a contract with a moving DR provider in one embodiment of the present invention. In FIG. 1, a person 10 is going to sign a contract with a server (aggregator) 100 for a DR service 22.

Based on one embodiment of the present invention, the contract includes any combination of the following items; DR timing, sequence, limitation amount, incentive, resource-by-resource incentive, location-wise incentive, the range that resources utilization pattern can be modified as DR activity, contract duration, location-wise desired resource utilization pattern, location-wise modifications items in the past.

After signing the contract, the person 10 receives DAM 12. For example, DAM 12 includes at least two identifiers (identifier 1 and identifier 2).

The identifier 1 is an identifier identifying the aggregator which purchases the DR service of DAM holding the DR provider (for example, the aggregator ID or an IP address of the server of the aggregator).

The identifier 2 is an identifier identifying a DR supply contract between the DR provider and the DR aggregator (for example, user ID). In one embodiment, it is possible that DAM is formed with a smart card such as a card-type recording medium, a portable storage medium, a near field communication device (NFC), a code string, and a numeral value inputted to DRC.

DRC checks the communication address of the aggregator which purchases the DR service of the DAM owner with the identifier 1 of DAM. On receipt of the identifier 2 of DAM from DRC, the aggregator which purchases the DR service of the DAM holder checks, with the identifier 2 of DAM, the data related to the user (contract content, resources utilization request setting, and historical resource utilization).

Generally, after DRC (DR controller) 200 is activated by DAM 12, DRC 200 transmits at least the identifier 2 via a communication route 22. This procedure is performed in premises 20-A and 20-B in which DRC 200 can control a plurality of resources 21-A and 21-B. Then the DR provider selects to activate DAM through the input of DAM to DRC. It should be noted that DRC is an example of the terminal apparatus.

For example, a resource 21 includes an energy consumption device, an energy generation device, or an energy storage device. For example, the energy consumption device includes an air conditioner, heating ventilation and air conditioning (HVAC), a refrigerator, and illumination. For example, the energy generation device includes an energy generation system using renewable energy such as a photovoltaic energy generation system, a wind energy generation system, or a fuel cell. The energy storage device includes a lithium-ion battery system, a NAS battery system, an electric vehicle, a flywheel, and a capacitor.

### [Data management options]

There is one of the other embodiments on the type of data that can be integrated in DAM.

In one embodiment, DAM only records the identifier 1 and the identifier 2, DRC obtains a correct aggregator that DRC should contact, and the user contract data and the historical data are available in a remote server.

In addition to the identifier 1 and the identifier 2, in one of the other embodiments, the user contract data and historical performance are stored in DAM and are directly used by DRC. In this embodiment, the main merit is protecting the privacy of the user data. Moreover, there is also a merit that when the aggregator is changed, the data can be easily shared with the new aggregator since they are available in the access of user on the DAM.

In one of the other embodiments, the user can select the data to be stored in DAM and the data to be stored in a remote server.

In one of the other embodiments, some of the data items are stored in DAM, and some of the data items are available in the remote server of the aggregator.

### [Example of DAM information]

The following will show a sample of data stored in DAM according to one embodiment of the present invention.

### 1. Aggregator ID (identifier 1)

Aggregator company information (name, contract address, server IP address, and the like)

### 2. User ID (identifier 2)

DR contract ID
DR type, DR activation rule, DR reservation rule, DR penalty, and the like.
DR amount condition (minimum/maximum kW, kWh, hour for each DR action)

### 3. Personal setting

Incentive required by the user
Account for financial settlement
User additional conditions (time, DR target device (or non DR target device)

### 4 Raw historical data

Historical data on time, location, duration, and the performance when the previous DR action is completed

### 5. Extracted or analyzed data

DR success proportion for each time, location, and device, and energy consumption

### [DRC process after activation]

When activation is performed by user x in one embodiment, DRC y checks whether or not the user x is permitted to use this DRC.

The aggregator at least receives information about DR resource type (user x having a specific contract) ready to be subject to DR and information about whether or not which resources are available at the control of activated DRC (DRC y). In different embodiments, it is possible that data to be transmitted from DRC to the aggregator is different.

However, there is at least one data item to be transmitted from DRC to the aggregator, and the data item causes the aggregator to verify the user DR contract that activated DRC. This information is transmitted to the aggregator via DRC. This data is generated using the user input from DAM (identifier 2).

In one embodiment, the user contract information may be extracted by the use of the database and the identifier 2 on the server by the aggregator.

In one of the other embodiments, the contract data may be recorded in DAM.

In one of the other embodiments, a part of the contract data may be recorded in DAM and another part of the contract data may be stored in the aggregator.

In one of the other embodiments, the list of resources that DRC is controlling may be extracted just by DRC using its data, or by aggregator using its data or both. However, there is at least one data item to be transmitted from DRC to the aggregator, and the data causes the aggregator to verify DRC.

FIG. 2 is a block diagram of an internal process of an aggregator 100 and DRC 200 in one embodiment of the present invention.

In one embodiment of the present invention, user 10 activates DRC 200 via an activation and verification unit 202 using DAM 12. The activation and verification unit 202 verifies the connected aggregator (identifier 1), the contract ID of the user 10 (identifier 2), and whether or not the user 10 has access permission for using the resource 21 having the right to control with this DRC or DRC 200 (identifier 3).

A communication unit 203 transmits and receives data or at least the identifier 1 and the identifier 2 to the designated aggregator 100. The communication unit 203 further communicates with the resource 21 by being controlled by DRC 200. DR activation signals and resource background information (remaining energy, operation setting value, on/off situation, temperature, operation mode, resource ID) are transmitted by the communication unit 203. The data is stored in a memory 204. An operation management unit 205 uses the data stored in the memory 204 for operation.

The operation management unit 205 manages the management of the controlled resource 21, based on a schedule received from the aggregator 100. DRC may include an interface unit 201 for allowing the user to control the operation situation of the resource 21 and the like. For simplicity of notation hereafter, "the case which the user 10 activates DRC 200 with DAM" will be described as (user x, DRC y).

In one embodiment of the present invention, data items required for the operation management of DRC is requested from DRC, and are received from the aggregator 100, the user 10, or a combination of both. These data items are stored on a remote server, a user DAM memory, a DRC memory, or a combination of these. In one of the other embodiments, when there is non-available data in the memory (an example of the case where user x uses DRC y for the first time in a duration that user x uses DRC y), DRC can communicate with the user and can receive the data, or the data is transmitted to DRC via the communication unit 203. DRC 200 can contact the user 10, and provides or receives a text, an image, or a voice message through interface, or requested data through a registered telephone or pager for data transmission and reception.

In one embodiment of the present invention, the activation of DRC using DAM does not necessarily have to be performed by being physically available in the DRC premise. Here, DAM is introduced into DRC by inserting a card which reads or writes information using symbol, code, NFC, electromagnetic wave, or the like. It should be noted that a method for introducing DAM into DRC is not limited to the above described method.

### [Aggregator activities after receiving DRC activation signal]

In one embodiment of the present invention, when the aggregator 100 receives at least the identifier 2 of (user x, DRC y), the aggregator 100 verifies the DRC activation, the user contract, the feasibility of (user x, DRC y) pair, using the available data in the memory 102 and the received data from DRC.

In one embodiment of the present invention, data available in the aggregator memory include user x contract, user x historical DR, and resource utilization performance. User x desired settings for resource utilization and data received from activated DRC include resources controlled by user x using DRC y (identifier 3), DRC y characteristics, and the location of DRC

The management of DR schedule of DRC y when user x uses DRC y is performed by a pairing management unit 103.

In the pairing management unit according to one embodiment, the aggregator verifies whether or not user x can use DRC y. Then, the DRC y resources and the extent that they can be utilized by user x, and the extent of DR that can be expected from the resources are analyzed. Afterwards based on the DR portfolio operational information (the DR amount that can be sold to the market, or the DR amount of energy consumption) and the (user x, DRC y) pair analysis data, the schedule of (user x, DRC y) is generated by the pairing management unit 103.

After the (user, DRC) pair schedule is determined by the aggregator 100, the schedule is transmitted to DRC 200. An operation management unit 104 of the overall portfolio manages the overall portfolio DR operational situations. After the DR action is performed, a settlement unit 105 performs a financial settlement by the user. In all these procedures the management of the required data, their accessibility, sharing, timing, and storing place are managed by a data management unit 106.

According to one embodiment of the present invention, the DR portfolio operation information includes selling DR price, energy price, load forecast, available DR portfolio forecast, DR purchaser 40 conditions, and weather forecast).

According to one embodiment of the present invention, (user x, DRC y) pairing process includes expected performance of user x in different DR services (peak cut, ancillary service, energy reduction, frequency regulation, and the like), location of DRC y in the grid, the performance of DRC y resource in DR action, the DR performance of user x when using DRC y, incentive required to be paid to user x for performing any type of DR while using DRC y, a duration that user x controls resources of DRC y, and any type of constraint set by user x for DR activity when using DRC y.

There are some cases that due to lack of required data in (user x, DRC y) pairing process, the feasibility of (user x, DRC y) schedule needs to be verified. According to one embodiment the present invention, this verification can be performed by DRC, aggregator, or both. The data process for verification process is performed by the communication unit or interface of DRC that is activated by user x.

According to one embodiment of the present invention, the data is required for verifying the duration that user x has the right to control DRC y resources. In this case, according to one embodiment, DRC y communicates with user x via interface, a mobile phone, a pager, and the like.

For example, when going to a hot plate grill restaurant, the user wants to perform DR while using a hot plate electric oven on the table. In that case, the DRC of the user table does not know how long the user will stay there, even though there is a restaurant policy that the user can stay for up to two hours. Therefore, the user 10 inquires the feasible DR duration via DRC 200.

### [Sequence of activation between DRC and aggregator]

FIG. 3 is a diagram showing the DR scheduling and implementation sequence according to one embodiment of the present invention. FIG. 4 is a diagram showing the sequence of revising the DR schedule.

According to one embodiment of the present invention, upon activation of DRC, DRC extracts the required data from DAM, transmits the data to the aggregator, and receives the schedule. Upon receiving of the schedule form aggregator, DRC verifies the feasibility and asks for the revisions to the DR schedule when there is no feasibility. Later, the aggregator generates the final DR schedule based on the revision request by DRC.

During the operation, DRC monitors the DR performance based on the schedule, transmits the performance data to the aggregator, and then the settlement and data management are followed.

### [DRC activity flowchart]

FIG. 5A is a flowchart of DRC activity in one embodiment of the present invention. First, DRC is activated using DAM (S500). Next, DRC analyzes user DAM data, and finds a contact address of the aggregator and user contract identification information (S501). A specific example of the user contract information is shown in (a) in FIG. 5B. (a) in FIG. 5B shows the user having a contract and the contract content of the user. In other words, as DR service, user A signs a contract for a peak cut from 13:00 to 15:00. Moreover, as DR service, user B signs a contract for a peak cut from 13:00 to 14:00.

Then DRC generates the list of available resources controlled by the user that activates DRC. Then DRC generates context information (S502). A specific example of the context information is shown in (b) in FIG. 5B. (b) in FIG. 5B shows, for each of the users, a device available to the user, and a time duration that the user stays in the place where the user uses the device. In other words, user A can use an air conditioner as the device, and the time when the user stays at the place where the user can use the air conditioner is from 0:00 to 11:00. Moreover, user B can use a television as the device, and the time when the user stays at the place where the user can use the television is from 0:00 to 24:00.

Next, DRC transmits the generated context information to the aggregator (S503).

After S303, DRC receives the (user x, DRC y) DR schedule from the aggregator. DRC generates the operation schedule for the resource and performs the received schedule (S505).

DRC monitors the performance of the resource, and performs the operation and the DR control (S506). Then, DR performance report is transmitted to the aggregator (S507).

DRC stores the performance data, or updates DAM data according to a method based on different embodiments on data storage options discussed earlier (S508).

In one of the other embodiments of the invention, in S505, DRC y verifies whether or not the operation schedule is feasible by updating the resource situation and the duration that user x can control DRC y (for example, when user x stays at a hotel room and should check out at 11:00 a.m. and when the resources of the room can be used for DR at 12:00, user x has no right to control the room resources since user x has to check out at 11:00 a.m. In this case, a DR plan for 12:00 is not feasible).

After feasibility verification, when there is any contradiction, DRC transmits the revision request to the aggregator. Afterwards DRC receives the final schedule from the aggregator, and performs the final schedule.

FIG. 6 is a flowchart of DRC activity in one embodiment of the present invention.

### [Aggregator process flowchart]

FIG. 7 is a flowchart of aggregator process in one embodiment of the present invention.

When DRC is activated by a user, the aggregator receives the activation signal (S700). User DAM data and DRC data are received, fetched, and verified (S701 and S702). Using the data in the previous steps, the (user x, DRC y) pair data are fetched, analyzed, and verified (S703).

Afterwards by analyzing the DR portfolio operation data, (user x, DRC y), and analysis data of S403 (S704), the (user x, DRC y) schedule is generated, verified, and transmitted (S705). DR portfolio operation management is performed (S706).

After the operation, the financial settlement, and user, DRC, and (user x, DRC y) pair data are stored and managed (S707).

In one of the other embodiments of the present invention, in S705, when the aggregator receives the revision request from DRC, the aggregator determines the final schedule, and transmits it to DRC for implementation.

FIG. 8 is a flowchart of aggregator process in one embodiment of the present invention.

### [(user x, DRC y) pair DR schedule consideration]

FIG. 9 is consideration of (user x, DRC y) pair DR analysis consideration in one embodiment of the present invention. In FIG. 2, there is (user x, DRC y) pair data extraction core part 900. In one embodiment, the data of this block is shown below.

### 1. User data set

### Contract context information 901

Utilization of personal request resources, and a DR pattern 902 including location-wise situation (for example, a setting temperature for the requested AC and incentive to be requested for the performing of DR with AC, in the case where there is a difference between when the user uses AC for DR at home and when the user uses AC for DR outside home).

Historical resource utilization data 903. In one embodiment of the present invention, when not defined by the user, the historical resource utilization is used to extract the location-wise required resource utilization patterns of customer.

### 2. DRC data set

### Control resource data 904

In one embodiment of the present invention, the control resource data may be transmitted to the aggregator each time DRC is activated, or may be updated every time a change occurs after being stored in the aggregator, or may be implemented by a combination of both. In one embodiment of the present invention, the data may include the contextual information of the available resources, or the data can be a reduced set of information items.

### Location of DRC 905.

In one embodiment of the present invention, DRC may transmit the location data or the aggregator identifier such that the aggregator can perform mapping on the power grid.

### Historical resource utilization data 906.

### 3. (user x, DRC y) pair data set.

Duration 907 that the user can control the resource of DRC y.

In one embodiment, this duration may be extracted from the historical data, can be asked from the user through communication, and may be implemented with a combination of both.

Resource of DRC y that the user is allowed to control 908.

In one embodiment, DRC, the aggregator, the user, or a combination of these determines the accessibility of the user to the resource of DRC.

Historical resource utilization data 909 of the user who uses DRC y.

User x contract and location-wise characteristic 910 of requesting resource utilization pattern.

### 4. DR portfolio operation data set 911.

In an embodiment, all the processes are performed by the aggregator, DRC, or a combination of both.

### [Example of utilization]

This section shows a sample of demand response service according to one embodiment of the present invention. This is an example and shows one embodiment of the present invention. A technical scope of the present invention is not limited to the scope to be described later.

User x signs a contract with aggregator A. User x permits an electric vehicle (with the condition that it should be fully charged at 6:00 a.m. weekdays and 8:00 a.m. weekend when any DR activity is performed using EV) and all the electric appliances excluding television (television is not used for DR).

In the case of air conditioner (AC), user x sets the maximum acceptable temperature at 28 °C when user x is at home and sets the maximum acceptable temperature at 26 °C when user x uses any air conditioner in premises other than the home. This means that user x permits DR using the air conditioner until the time when a temperature reaches the maximum acceptable temperature. As incentive, user x agrees to a unit price per KWh of DR.

When user x is at home and performs DR using the air conditioner in air conditioning cooling operation, user x activates home DRC using DAM. User x performs DR by increasing the air conditioner temperature or switching off the air conditioner. Afterwards when the room temperature reaches the maximum acceptable temperature of 28 °C, aggregator A connects user x home DRC, and checks whether or not user x intends to continue DR using the air conditioner in order to obtain higher incentive.

However, user x rejects the offer and restores the operation of the air conditioner. This case happens for several times when user x is at home between 10:00 p.m. and 12:00 p.m. and user x always rejects the offer every time.

User x works at a company which has recently moved its location. A building which houses the company does not sign a contract with aggregator A. When the user leaves home and goes to a personal office room, the user activates DRC of the personal office room using the user DAM. DRC reads DAM data, and recognizes that the data should be transmitted to aggregator A. The aggregator receives and verifies contract ID from DRC of the user's office. User x uses DRC of the office.

After being activated with DAM of user x, DRC checks DR available resources from the resources that can be controlled by user x. The resources that can be controlled by DRC include an EV charger of the user, an air conditioner of the room, a security camera of the room, and a PC.

However, due to security rules of the company, user x is not allowed to control the security camera of the room and the PC. In other words, user x is allowed to control the EV charger and the air conditioner of the room. DRC of the office transmits, to aggregator A, these information items together with an AC compressor value, a room temperature, a state of charge (SOC) of an EV battery of user x, and an EV charger charging capability. Aggregator A, for example, generates a schedule for the device available to user x for reducing load within the office from 6:00 p.m. to 8:00 p.m.

Such a main schedule (reduction in load from 6:00 p.m. to 8:00 p.m.) is transmitted by aggregator A to DRC of the office. However, according to historical resource utilization of the user, the user always leaves the office by 7:10 p.m. (As a result, the user cannot perform DR at the office after 7:10 p.m.) In this case, DRC does not verify the DR plan from 6:00 p.m. to 8:00 p.m. DRC performs verification from 6:00 p.m. to 7:00 p.m., and transmits, to aggregator A, a revision request that the DR duration is shortened to "from 6:00 p.m. to 7:00 p.m." According to the revised plan, aggregator A can determine whether or not the user hopes to perform (user x, DRC office) DR for an hour.

Since a power system surrounding this company is defective and the price of DR is high, the aggregator permits DR from 6:00 p.m. to 7:00 p.m. Then, user x who performed DR is paid a further incentive in addition to (C dollars/kWh).

Here, when the air conditioner is off with DR and the room temperature reaches 26 °C, the air conditioner restores its operation according to the personal setting of user x. However, aggregator A needs further DR, and offers, to user x, (C + D) dollars/KWh for continuing to be off.

User x accept this offer when user x is at the office. This occurs several times, and then aggregator A learns that (user x, DRC home) can extend DR of the air conditioner in (user x, DRC office) pair without extending DR of the air conditioner.

Next, aggregator A does not consider (user x, DRC home) DR at night which is extended for an estimate of DR portfolio. However, aggregator A considers a possibility of extended air conditioner DR in the daytime. As described above, since user x has recently moved to this building, aggregator A does not have a DR provider to perform DR around this company.

Therefore, aggregator A searches a DR purchaser who purchases power of the DR provider (user x) who intends to perform DR around this company anytime soon. This DR purchaser is for example a utility and a power transmission and distribution company. According to the embodiment, aggregator A can increase the opportunity of aggregating DR (DR participating users in a predetermined grid).

After work, user x goes to a hot plate grill restaurant for a dinner for the first time. User x has the right to control an electric oven on the table of user x. When user x activates table DRC with DAM of the user, aggregator A knows that user x expects DR from the electric oven at the restaurant. However, there is no previous data on (user x, DRC restaurant) pair.

The activation is performed at 8:45. Although aggregator A hopes to use DR of the electric oven, user x has no data on a duration that user x has the right to control DRC of the table. Therefore, DRC contacts user x via interface of DRC and inquires about the duration that user x intends to use DRC.

When the user replies that the duration is one hour, (user x, DRC restaurant) is valid for one hour from 8:45, and the controllable resource is an electric oven. Although user x permits the full curtailment of the electric oven at home, user x puts a location-wise constraint that the electric oven should not be curtailed completely in a restaurant such that user x can grill the ordered meal.

Afterwards, aggregator A considers a location-wise constraint of user x, and schedules DR service pair (user x, DRC restaurant) such that there is energy reduction for a long duration. For example, the schedule includes spinning reserve DR, non-operation reserve DR, frequency control DR, frequency regulation DR, and not a load reduction service.

Each of the structural elements in each of the above-described embodiments may be configured in the form of an exclusive hardware product, or may be realized by executing a software program suitable for the structural element. Each of the structural elements may be realized by means of a program executing unit, such as a CPU and a processor, reading and executing the software program recorded on a recording medium such as a hard disk or a semiconductor memory. Here, the software program for realizing the image decoding apparatus according to each of the embodiments is a program described below.

In other words, the program is a controlling method in a terminal apparatus which can control an energy consumption device, and the program causes a computer to execute accepting a first identifier and a second identifier, the first identifier identifying a server which generates information for performing control of the energy consumption device, the second identifier identifying a contract unique to each user, for the control; transmitting the second identifier to the server identified by the first identifier; receiving, from the server, a control schedule as a response to the transmitted second identifier, the control schedule being generated based on the contract by the server and being for the energy consumption device; and controlling the energy consumption device to reduce energy consumption by the energy consumption device, based on the control schedule received in the receiving.

Although a demand response system and the like according one or more aspects has been described based on the embodiments, the present invention is not limited to the embodiments. Although only some exemplary embodiments have been described in detail above, those skilled in the art will readily appreciate that various modifications may be made in these exemplary embodiments without materially departing from the principles and spirit of the inventive concept, the scope of which is defined in the appended Claims and their equivalents.

### [Industrial Applicability]

The present invention is applicable to a demand response system which allows the user to perform DR even when the user is outside the designated premise.

### [Reference Signs List]

- 10: Person (user)
- 12: DAM
- 20-A, 20-B: Premise
- 21-A, 21-B: Resource
- 40: DR purchaser
- 50: System manager
- 100: Server (aggregator)
- 101, 203: Communication unit
- 102: Memory
- 103: Pairing management unit
- 104: Operation management unit
- 105: Settlement unit
- 106: Data management unit
- 200: DRC (DR controller)
- 201: Interface unit
- 202: Activation and verification unit
- 204: Memory
- 205: Operation management unit
- 206: User resource verification unit

## Claims

1. A demand response system comprising:
a terminal apparatus capable of controlling an energy consumption device; and
a server capable of communicating with the terminal apparatus via a network,
wherein the terminal apparatus includes:
an input unit configured to accept a first identifier and a second identifier, the first identifier identifying the server, the second identifier identifying a contract unique to each user, for controlling the energy consumption device;
a first transmission unit configured to transmit the second identifier to the server identified by the first identifier;
a first receiving unit configured to receive a control schedule, from the server, as a response to the transmitted second identifier, the control schedule being generated based on the contract by the server and being for the energy consumption device; and
a first control unit configured to control the energy consumption device to reduce energy consumption by the energy consumption device, based on the control schedule received by the first receiving unit,
wherein the server includes:
a second receiving unit configured to receive the second identifier from the terminal apparatus;
a second control unit configured to generate a control schedule, based on the contract identified by the second identifier, the control schedule being for the energy consumption device and being unique the user; and
a second transmission unit configured to transmit the control schedule generated by the second control unit to the terminal apparatus as a response to the received second identifier.

2. The demand response system according to Claim 1,
wherein the terminal apparatus further includes a first memory which stores a third identifier identifying the energy consumption device,
the first transmission unit is further configured to transmit the third identifier to the server,
the second receiving unit is further configured to receive the third identifier from the terminal apparatus, and
the second control unit is configured to generate a control schedule as the control schedule based on a contract identified by the second identifier, the control schedule being for the energy consumption device identified by the third identifier, and being unique to each user.

3. The demand response system according to Claim 1 or 2,
wherein the energy consumption device is an energy consumption device which is installed at a location where the user is allowed to control energy consumption,
the first memory holds location information indicating the location,
the first transmission unit is configured to transmit the location information to the server,
the second receiving unit is configured to receive the location information from the terminal apparatus, and
the second control unit is configured to generate a control schedule as the control schedule based on the contract identified by the second identifier, the control schedule being for the energy consumption device, being unique to each user, being for the energy consumption device identified by the third identifier, and being determined based on the location information.

4. The demand response system according to any one of Claims 1 to 3,
wherein the first memory holds DR information which is information about an operation situation of the energy consumption device or about a duration that the user is allowed to use the energy consumption device,
the first control unit is configured to determine whether or not control of the energy consumption device is allowed to be performed according to the control schedule by comparing the control schedule with the DR information,
when the first transmission unit determines that the control is not allowed to be performed, the first transmission unit is configured to transmit, to the server, (i) a revision request for revising the control schedule and (ii) revision information about an operation situation of the energy consumption device or about a duration that the user is allowed to use the energy consumption device,
the second receiving unit is configured to receive the revision information from the terminal apparatus,
the second control unit is configured to generate the control schedule by revising the control schedule based on the revision information, and
the first control unit is configured to control the energy consumption device based on the control schedule revised by the second control unit.

5. The demand response system according to Claim 4,
wherein the terminal apparatus transmits the control schedule to a notification device which notifies a user of the control schedule, and
the first control unit is configured to determine whether or not the control is allowed to be performed based on (i) an instruction inputted via the notification device by the user and (ii) the control schedule.

6. The demand response system according to Claim 5,
wherein the terminal apparatus includes an interface which shows the control schedule to the user by an image, a text message, or voice, and
the first control unit is configured to, after showing the control schedule to the user, determine whether or not the control is allowed to be performed according to the control schedule, based on an instruction inputted via the interface by the user.

7. The demand response system according to Claim 5 or 6,
wherein the first control unit is configured to control the energy consumption device based on the control schedule when the control is allowed to be performed, and to revise the control schedule based on content of the instruction by the user when the control is not allowed to be performed.

8. The demand response system according to Claim 6,
wherein the first transmission unit is configured to transmit result information indicating a result of the control,
the second receiving unit is configured to receive the result information from the terminal apparatus, and
the server further includes a second memory which stores the result information received by the second receiving unit.

9. The demand response system according to any one of Claims 1 to 8,
wherein the input unit is configured to accept the first identifier and the second identifier by reading the first identifier and the second identifier from a recording medium having the first identifier and the second identifier recorded thereon.

10. The demand response system according to any one of Claims 1 to 9,
wherein the energy consumption device is at least one of a home electric appliance, an energy storage device, and an energy generation device.

11. The demand response system according to any one of Claims 1 to 10,
wherein the control is a response of a user to a request from an aggregator or a service provider which is capable of responding to at least one of a change in user profile, a change in user energy profile, and a request to be used as a source of an ancillary service related to DR such as a reserve emergency backup, a frequency regulation, or a price regulation.

12. A server which is capable of communicating via a network with a terminal apparatus capable of controlling an energy consumption device, the server comprising:
a receiving unit configured to receive a second identifier from the terminal apparatus connected to the energy consumption device, the second identifier identifying a contract unique to each user, for controlling the energy consumption device;
a control unit configured to generate a control schedule based on the contract identified by the second identifier, the control schedule being for the energy consumption device; and
a transmission unit configured to transmit, to the terminal apparatus, the control schedule generated by the control unit.

13. A terminal apparatus which is capable of controlling an energy consumption device, the terminal apparatus comprising:
an input unit configured to accept a first identifier and a second identifier, the first identifier identifying a server which generates information for performing control on the energy consumption device, the second identifier identifying a contract unique to user, for the control;
a transmission unit configured to transmit the second identifier to the server identified by the first identifier;
a receiving unit configured to receive, from the server, a control schedule as a response to the transmitted second identifier, the control schedule being generated based on the contract by the server and being for the energy consumption device; and
a control unit configured to control the energy consumption device to reduce energy consumption by the energy consumption device, based on the control schedule received by the receiving unit.

14. A controlling method in a terminal apparatus which is capable of controlling an energy consumption device, the controlling method comprising:
accepting a first identifier and a second identifier, the first identifier identifying a server which generates information for performing control of the energy consumption device, the second identifier identifying a contract unique to each user, for the control;
transmitting the second identifier to the server identified by the first identifier;
receiving, from the server, a control schedule as a response to the transmitted second identifier, the control schedule being generated based on the contract by the server and being for the energy consumption device; and
controlling the energy consumption device to reduce energy consumption by the energy consumption device, based on the control schedule received in the receiving.

15. A recording medium which is accepted in the input unit of the terminal apparatus in the demand response system according to any one of Claims 1 to 11, the recording medium having the first identifier and the second identifier recorded thereon.
